(19) Europäisches Patentamt
European Patent Office
Office européen des brevets

(11) **EP 3 920 277 A1**

(12) **EUROPEAN PATENT APPLICATION**
published in accordance with Art. 153(4) EPC

(43) Date of publication:
**08.12.2021 Bulletin 2021/49**

(21) Application number: **20749240.6**

(22) Date of filing: **29.01.2020**

(51) Int Cl.:
$H01M\ 4/139^{(2010.01)}$    $H01M\ 4/62^{(2006.01)}$
$H01M\ 4/04^{(2006.01)}$    $H01M\ 4/36^{(2006.01)}$
$H01M\ 4/587^{(2010.01)}$    $H01M\ 4/48^{(2010.01)}$
$H01M\ 4/38^{(2006.01)}$    $H01M\ 4/13^{(2010.01)}$
$H01M\ 10/052^{(2010.01)}$

(86) International application number:
**PCT/KR2020/001313**

(87) International publication number:
**WO 2020/159207 (06.08.2020 Gazette 2020/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.01.2019 KR 20190011895**

(71) Applicant: **SK Innovation Co., Ltd.
Seoul 03188 (KR)**

(72) Inventors:
• **LEE, Yongseok
Daejeon 34124 (KR)**
• **KIM, Junghwan
Daejeon 34124 (KR)**
• **BAE, Sangwon
Daejeon 34124 (KR)**
• **BAE, Jihee
Daejeon 34124 (KR)**
• **LEE, Myungro
Daejeon 34124 (KR)**

(74) Representative: **Stolmár & Partner
Patentanwälte PartG mbB
Blumenstraße 17
80331 München (DE)**

(54) **SECONDARY BATTERY AND METHOD FOR MANUFACTURING SAME**

(57) A method for manufacturing a secondary battery according to the present invention comprises the steps of: a) adding a point-type conductive carbon material to a negative electrode active material slurry and mixing the materials to prepare a first mixed slurry; b) adding a linear conductive carbon material to the first mixed slurry and mixing the materials to prepare a second mixed slurry; and c) coating a current collector with the second mixed slurry and performing rolling to manufacture an electrode.

[FIG. 1]

After formation (micro Pore)

**Description**

[Technical Field]

The present invention relates to a lithium secondary battery and a method for manufacturing the same.

[Background Art]

Due to tightened environmental regulation, high oil prices, exhaustion of fossil energy, and the like, interests in electric automobiles and hybrid electric automobiles which may replace vehicles using fossil fuel, such as gasoline cars and diesel cars are greatly increasing.

Currently, a nickel hydrogen metal secondary battery is mainly used as a high-capacity secondary battery such as a power source of electric automobiles, but a study of using a lithium secondary battery which has a higher power density (at least three times higher) than a nickel hydrogen metal secondary battery, a long cycle life, and a low self-discharge rate, as a main power source of an electric automobile, is actively underway.

In order to use the lithium secondary battery as the power source of an electric automobile, most of all, a high capacity should be implemented, and for this, technology for a new negative electrode active material or positive electrode active material having a high capacity is being developed.

As the negative electrode active material, a material into or from which lithium may be inserted or desorbed may be utilized, and since a graphite-based active material has a low discharge voltage for lithium to provide a merit in terms of an energy density and also has a merit of guaranteeing a long life by excellent reversibility, the graphite-based active material is currently the most widely used in the lithium secondary battery.

However, as a higher capacity of the lithium secondary battery is required, a material having a higher theoretical capacity than 372 mAh/g, which is a theoretical capacity of graphite, which is mainly silicon (Si), tin (Sn), or an oxide thereof, an alloy thereof, and the like, being alloyed with lithium, is being studied as a new negative electrode material, and among these, a silicon-based material has received attention due to a low price and a high capacity (4200 mAh/g).

However, a silicon-based material has very bad life characteristics due to desorption, cracks, decreased conductivity between active materials, and the like by a large volume change occurring during charge and discharge of a battery, and various attempts such as complexation with graphite, complexation with a lithium solid electrolyte, and nanostructuralization are made for solving the problem, but the process is complicated and is not appropriate for mass production as compared with the improved effect, and thus, has not reached the level of commercialization yet.

**[Disclosure]**

[Technical Problem]

An object of the present invention is to provide a secondary battery including an electrode which has a decreased porosity of micropores by preventing breakage of an active material during rolling and a method for manufacturing the same.

Another object of the present invention is to provide a secondary battery including an electrode which has improved electrical conductivity and binding strength and a method for manufacturing the same.

Still another object of the present invention is to provide a secondary battery having an improved cycle characteristic and a method for manufacturing the same.

[Technical Solution]

In one general aspect, a method for manufacturing a secondary battery includes: a) adding a point type conductive carbon material to a negative electrode active material slurry and mixing the materials to prepare a first mixed slurry; b) adding a dispersion of a linear conductive carbon material to the first mixed slurry and mixing the materials to prepare a second mixed slurry; and c) coating a current collector with the second mixed slurry and performing rolling to manufacture an electrode.

In the method for manufacturing a secondary battery according to an exemplary embodiment of the present invention, the point type conductive carbon material may be added to the negative electrode active material slurry having a solid content of 45 wt% or more in step a).

In the method for manufacturing a secondary battery according to an exemplary embodiment of the present invention, after adding a dispersion in step b), a solid content of the slurry to which the dispersion is added may be a value decreased by 5 to 15 wt% from a solid content of the negative electrode active material slurry.

In the method for manufacturing a secondary battery according to an exemplary embodiment of the present invention, the point type conductive carbon material may be carbon black, acetylene black, ketjen black, channel black, furnace black, lamp black, thermal black, or a mixture thereof.

In the method for manufacturing a secondary battery according to an exemplary embodiment of the present invention, the linear conductive carbon material may be carbon nanotubes, carbon fiber, or a mixture thereof.

In the method for manufacturing a secondary battery according to an exemplary embodiment of the present invention, the negative electrode active material may be a carbon-based active material, a silicon-based active material, or a mixture thereof.

In the method for manufacturing a secondary battery according to an exemplary embodiment of the present invention, 0.3 to 5 parts by weight of the point type conductive carbon material may be added based on 100 parts by weight of the negative electrode active material in step a) .

In the method for manufacturing a secondary battery according to an exemplary embodiment of the present invention, the dispersion of the linear conductive carbon material may be added so that 0.1 to 1.5 parts by weight of the linear conductive carbon material is added based on 100 parts by weight of the negative electrode active material in step b).

In the method for manufacturing a secondary battery according to an exemplary embodiment of the present invention, a diameter ratio of an average diameter ($D_{50}$) of the negative electrode active material divided by an average diameter ($D_{50}$) of the point type conductive carbon material may be 50 to 300.

In the method for manufacturing a secondary battery according to an exemplary embodiment of the present invention, the average diameter ($D_{50}$) of the negative electrode active material may be 5 to 20 $\mu$m.

In another general aspect, a secondary battery manufactured by the method described above is provided.

The secondary battery according to the present invention includes an electrode in which an active material layer including a negative electrode active material having an average diameter ($D_{50}$) of 5 to 20 $\mu$m, a point type conductive carbon material, a linear conductive carbon material, and a binder is disposed on at least one surface of a current collector, the negative electrode active material being sequentially coated with the point type conductive carbon material and the linear conductive carbon material.

In the secondary battery according to an exemplary embodiment of the present invention, the electrode may satisfy the following Equation 1:

$$(Equation\ 1)$$

$$[Vp(For)-Vp(RP)]/Vp(RP) \times 100\ (\%) \leq 20\ (\%)$$

wherein Vp(RP) is a porosity ($cm^3/g$) of micropores present in the active material layer, based on a densified state by roll pressing, Vp(For) is a porosity ($cm^3/g$) of micropores present in the active material layer, based on an activated state by a formation process.

In the secondary battery according to an exemplary embodiment of the present invention, the electrode may have a resistance of 0.05 $\Omega$.cm or less.

In the secondary battery according to an exemplary embodiment of the present invention, the electrode may have a density of 1.5 $g/cm^3$ or more.

In the secondary battery according to an exemplary embodiment of the present invention, the negative electrode active material may be a carbon-based active material, a silicon-based active material, or a mixture thereof.

In the secondary battery according to an exemplary embodiment of the present invention, the active material layer may include 0.3 to 5 parts by weight of the point type conductive carbon material and 0.1 to 1.5 parts by weight of the linear conductive carbon material, based on 100 parts by weight of the negative electrode active material.

In the secondary battery according to an exemplary embodiment of the present invention, the point type conductive carbon material may include carbon black, acetylene black, ketjen black, channel black, furnace black, lamp black, thermal black, or a mixture thereof.

The secondary battery according to an exemplary embodiment of the present invention includes a lithium secondary battery.

[Advantageous Effects]

The method for manufacturing a secondary battery according to the present invention has advantages of having no need for a high degree of modification of a process of manufacturing an active material slurry which has been previously established in the conventional secondary battery field, and having excellent electrical properties and improved cycle characteristics with a very small amount of a conductive material, only by simply changing conditions of a raw material added in the preparation of the active material slurry or an addition order thereof, even with the use of a silicon-based active material having a micrometer size.

The secondary battery according to the present invention includes an electrode including a silicon-based active material having a micrometer size and having excellent electrical properties and high binding strength even with a very small amount of a conductive material included, thereby having improved cycle characteristics.

[Description of Drawings]

FIG. 1 is a drawing illustrating a micropore size distribution of negative electrodes manufactured in Example 1, Comparative Example 1, and Comparative Example 2.
FIG. 2 is a drawing illustrating charge and discharge cycle characteristics of batteries manufactured in Example 1, Comparative Example 1, and Comparative Example 2.

[Best Mode]

Hereinafter, the method for manufacturing a secondary battery and the secondary battery according to the present invention will be described in detail with reference to the accompanying drawings. The drawings to be provided below are provided by way of example so that the idea of the present invention can be sufficiently transferred to a person skilled in the art to which the present invention pertains. Therefore, the present invention is not limited to the drawings provided below but may be embodied in many different forms, and the drawings suggested below may be exaggerated in order to clarify the spirit of the present invention. Technical terms and scientific terms used herein have the general meaning understood by those skilled in the art to which the present invention pertains unless otherwise defined, and a description for the known function and configuration which may unnecessarily obscure the gist of the present invention will be omitted in the following description and the accompanying drawings.

In order to commercialize a silicon-based material as a negative electrode active material of a secondary battery, both a problem with productivity in which an electrode may be mass-produced at low cost and is to be manufactured with uniform quality without a high degree of process control and a problem of long life (stable cycle) battery characteristics should be met.

Thus, in order to meet the productivity problem, the process of manufacturing an electrode (battery) using the previously established carbon-based active material should be used as it is if possible, and also, the silicon-based material should be based on a simple particle form having a micrometer order size rather than be highly shaped like a nanostructure or have a highly complexed form with other materials. In addition, in order to meet life characteristics, poor cycle characteristics (life characteristics) in which a battery capacity is decreased to 30% or less at 50 cycles when silicon having a simple particle form is used as an active material should be improved.

The present applicant conducted a long-term intensive study for developing an electrode for a secondary battery which may be commercialized while adopting a silicon-based material, and as a result, found that breakage of an active material occurring upon compression (roll pressing) of the active material for densification significantly adversely affects battery characteristics, in a silicon-based material having a large volume change and a low electrical conductivity involved in a charge and discharge reaction, and the bad influence of the breakage of the active material upon compression is greater in battery activation and acts as a big cause of increased resistance and deteriorated cycle characteristics.

Based on the discovery, the present applicant developed a method for manufacturing an electrode which may prevent breakage of an active material during manufacturing an electrode mixture, and may maintain stable electrical contact between active materials even when an active material having low conductivity and having a severe volume change in a battery reaction is adopted, thereby filing the present invention.

The method for manufacturing a secondary battery according to the present invention includes: a) adding a point type conductive carbon material to a negative electrode active material slurry and mixing the materials to prepare a first mixed slurry (hereinafter, referred to as a first slurry); b) adding a dispersion of a linear conductive carbon material to the first mixed slurry and mixing the materials to prepare a second mixed slurry; and c) coating a current collector with the second mixed slurry (hereinafter, referred to as an electrode slurry) and performing rolling to manufacture an electrode.

That is, in the method for manufacturing a secondary battery according to the present invention, both a point type conductive carbon material and a linear conductive carbon material are used, and after a slurry of a negative electrode active material (negative electrode active material slurry) is first prepared, the point type conductive carbon material and the linear conductive carbon material are not added simultaneously, but after the point type conductive carbon material is first added to the negative electrode active material slurry and mixed therewith, a dispersion of the linear conductive carbon material, that is, the linear conductive carbon material in a previously dispersed state, is added and the materials are mixed to prepare an electrode slurry which is second mixed slurry.

By separately adding the point type conductive carbon material and the linear conductive carbon material to the negative electrode active material slurry, but adding the point type conductive carbon material first and adding the linear conductive carbon material in a previously dispersed state to the slurry (first slurry), smooth lubrication between the active materials upon densification by compression occurs to stably maintain and form electrical contact between particles while preventing the breakage of the active material.

The negative electrode active material slurry in step a) may include a particulate negative electrode active material and a dispersion medium, and may further include a binder. Here, the dispersion medium may be a solvent of the binder.

The negative electrode active material may include a carbon-based active material, a silicon-based active material, or a mixture thereof, and the carbon-based active material may be crystalline carbon, amorphous carbon, or a mixture thereof, and specifically, the carbon-based active material may be artificial graphite, natural graphite, hard carbon, soft carbon, or a mixture thereof. The soft carbon may be derived from coal-based pitch, petroleum-based pitch, tar, heavy oil having a low molecular weight, and the like, and the hard carbon may be derived from a phenol resin, a naphthalene resin, a polyvinyl alcohol resin, a urethane resin, a polyimide resin, a furan resin, a cellulose resin, an epoxy resin, a polystyrene resin, and the like. The silicon-based active material may include silicon, silicon oxides, silicon alloys (transition metal such as Cu, Zr, Ni, Ti, Co, Cr, V, Mn, Fe-silicon alloy), mixture thereof, and the like.

The negative electrode active material may include silicon-based active materials, and substantially, include both the carbon-based active materials and the silicon-based active materials. When the negative electrode active material includes both the carbon-based active material and the silicon-based active material, the negative electrode active material may include 5 to 30 parts by weight, specifically 10 to 25 parts by weight of The silicon-based active material, based on 100 parts by weight of the carbon-based active material.

The negative electrode active material may have an average diameter ($D_{50}$) of 5 to 20 $\mu$m, specifically 5 to 15 $\mu$m. When the negative electrode active material includes both the carbon-based active material and the silicon-based active material, the carbon-based active material and the silicon-based active material may have, independently of each other, an average diameter ($D_{50}$) of 5 to 20 $\mu$m, specifically 5 to 15 $\mu$m. That is, the silicon-based active material may be particulates having an average diameter ($D_{50}$) of 5 to 20 $\mu$m, specifically 5 to 15 $\mu$m. Here, the particles may be primary particles, secondary particles in which the primary particles are agglomerated, or a mixture thereof.

The binder is dissolved in the dispersion medium and may be a material which is commonly used in a slurry for manufacturing a negative electrode in the conventional secondary battery. As a specific example, the binder may be a water-based binder resin such as polyethylene oxide, polypropylene oxide, polyacrylic acid, polyvinyl alcohol, polyvinyl acetate, sodium-polyacrylate, hydroxyethyl cellulose, carboxymethylcellulose, polyvinylidene fluoride, styrene-butadiene rubber, acrylonitrile-butadiene rubber, and acryl rubber, but the present invention is not limited thereto. The binder may be appropriately included at a level where electrical contact between active materials is not interfered and stable binding is formed, and as an example, the negative electrode active material slurry may include 0.5 to 5.0 wt%, as a specific example, 1.0 wt% to 5.0 wt% of the binder, but the present invention is not limited thereto.

The dispersion medium may include a water-based solvent, specifically water, but the present invention is not limited thereto. Specifically, the water-based solvent may be water or a mixed solution including water as a main component and a water-compatible solvent as a minor component other than water. The water-compatible solvent may be a volatile solvent such as an alcohol, a lower aliphatic ketone, and a lower alkyl acetate, but the present invention is not limited thereto. A non-limiting example of the alcohol may include C2-C4 alcohols such as methanol, ethanol, isopropanol, n-propanol, butanol, and a combination thereof. A non-limiting example of the lower aliphatic ketone may include acetone, dimethyl ketone, methyl ethyl ketone, a combination thereof, and the like, and a non-limiting example of the lower alkyl acetate may include ethyl acetate, isopropyl acetate, propyl acetate, a combination thereof, and the like.

When the water-based solvent includes water as the main component, 50 wt% or more, 60 wt% or more, 70 wt% or more, 80 wt% or more, 90 wt% or more, or 95 wt% or more of water may be included, and a residual amount of the minor component may be included, based on the total mass of the water-based solvent.

In an advantageous example, the point type conductive carbon material may be added to the negative electrode active material slurry having a solid content of 45 wt% or more. It is common that mixing is performed at a level of a solid content of 20 to 30 wt% for maintaining dispersibility of dispersed phases stable and preventing workability from being lowered during manufacture.

However, according to an advantageous example of the present invention, when the point type conductive carbon material is added to the negative electrode active material slurry having an extremely high solid content of 45 wt% or more and the materials are mixed, very high torque is applied to the slurry during mixing of the negative electrode active material and the point type conductive carbon material, and the point type conductive carbon material may be uniformly coated (physically coated) on the negative electrode active material by mechanical mixing.

In order to compensate for the low conductivity of the silicone-based material, it is common that a carbon source such as resins is coated on the silicon-based material or complexed with the silicon-based material and then carbonized by a heat treatment to form a conductive carbon-based coating film. However, in the silicon-based material having a large volume change during charge and discharge, a state in which a conductive carbon material which already has a

**EP 3 920 277 A1**

particle form is crushed by physical force to be attached (bound) to the silicon-based material is advantageous rather than a state in which the silicon-based material is entirely, strongly, and stably coated with a conductive carbon material in a uniform film form by thermal decomposition, since in the former state, the silicon-based active material may stably maintain the electrical contact even with repetitive charge and discharge.

In addition, it is difficult for the linear conductive carbon material to be bound to the surface of the silicon-based material by simple mixing due to the limitation of a linear shape and the linear conductive carbon material has a risk of being broken (cut) and damaged during mixing.

However, when the point type conductive carbon material is crushed by physical force to be bound to and surface-coated on the negative electrode active material including the silicon-based material by step a), the linear conductive carbon material may be stably and easily bound to the negative electrode active material by the point type conductive carbon material coated on the surface of the negative electrode active material, which is thus advantageous.

In addition, when the point type conductive carbon material is first added to the negative electrode active material slurry having an extremely high solid content of 45 wt% or more and the materials are mixed, and then the linear conductive carbon material is added and stirring is performed to prepare the electrode slurry, lubrication between the active materials is stably generated in a compression (roll pressing) process for densification to effectively prevent the breakage of the active material, which is thus advantageous.

Furthermore, in terms of commercialization, since a simple particulate silicon-based material having a micrometer order size may be used, the supply and demand and the handling of raw materials are easily performed and the electrode may be manufactured with low-priced raw materials, and also, a negative electrode in which a stable current movement path is maintained even with repetitive charge and discharge and micropores caused by the breakage of the active material are effectively suppressed, may be manufactured by a process of adding the point type conductive carbon material to the negative electrode active material slurry and mixing the materials, which is simple and previously established in the conventional process for manufacturing a secondary battery, which is thus advantageous.

As described above, the point type conductive carbon material may be added to the active material slurry and mixed therewith in a state of having a solid content of the negative electrode active material slurry of 45 wt% or more, specifically 45 to 70 wt%, more specifically 48 to 70 wt%, and more specifically 50 to 60 wt%. Thus, a negative electrode active material which is surface-coated with the point type conductive carbon material by physical force may be prepared, and a negative active material in a state of being easily coated with (bound or attached to) the linear conductive carbon material may be prepared.

Here, as described above, the negative electrode active material slurry may include a particulate negative electrode active material and a dispersion medium, or a particulate negative electrode active material, a binder, and a dispersion medium. Since the binder may be in a state of being dissolved in the dispersion medium, the solid content may substantially correspond to the negative electrode active material.

The point type conductive carbon material may be any particulate conductive carbon material, but preferably carbon black, acetylene black, ketjen black, channel black, furnace black, lamp black, thermal black, or a mixture thereof so that the carbon material is stably bound to the surface of the negative electrode active material within a short time by physical impact, shear force, or the like caused by mixing, but the present invention is not necessarily limited thereto.

A diameter ratio of an average diameter ($D_{50}$) of the negative electrode active material divided by an average diameter ($D_{50}$) of the point type conductive carbon material may be 50 to 300, specifically 100 to 200, and more specifically 100 to 150. Here, as described above, the negative electrode active material may have an average diameter ($D_{50}$) of 5 to 20 $\mu$m, specifically 5 to 15 $\mu$m.

It is known that it is more difficult for a finer point type conductive carbon material to play a lubrication role well in compression for densification. However, according to an advantageous example of the present invention, when the point type conductive carbon material having a diameter ratio with the negative electrode active material of 50 to 300, specifically 100 to 200, and more specifically 100 to 150 is added in a state in which the negative electrode active material slurry has a solid content of 45 wt% or more, thereby attaching (coating) the point type conductive carbon material on the surface of the negative electrode active material by physical force (mechanical force) generated during mixing, and then the linear conductive carbon material in a dispersed state is added to prepare an electrode slurry, the lubrication characteristics are better than that of a soft point type conductive carbon material having a micrometer order unit which is known as having good lubrication characteristics, and thus, the breakage of the active materials in densification may be effectively prevented.

Furthermore, according to an advantageous example of the present invention, when the electrode slurry is prepared, particles forming the active material layer may have excellent lubrication characteristics even with the use of a very small amount of the point type conductive carbon material. As an example, even when a common soft point type carbon material having a micrometer order unit which is known as having good lubrication characteristics is used (added) in an amount of 20% or less, the lubrication characteristics represented may be better than that of the soft point type carbon material having a micrometer order unit.

In a state in which the negative electrode active material slurry has a solid content of 45 wt% or more, when the point type conductive carbon material having a diameter ratio with the negative electrode active material (average diameter of the negative electrode active material/average diameter of the point type conductive carbon material) of 50 to 300, specifically 100 to 200, and more specifically 100 to 150 is added, a process in which the point type conductive carbon material is crushed to be attached to the negative electrode active material is repeatedly performed, so that the negative electrode active material may be coated by the point type conductive carbon material. Without being necessarily limited to the structure, a large amount of pores are positioned between the negative electrode active material and the point type conductive carbon material as compared with the carbon coating layer by complexation with a carbon source and a carbonation heat treatment, and the point type conductive carbon material itself may have an open structure in which crushed particles are laminated and bound (open structure providing a material such as an electrolyte solution movement path), not a dense film, by the manufacturing method.

The particle form in the electrode slurry may be in a state in which the particulate point type conductive carbon material is coated on the surface of the negative electrode active material by mechanical force, and the linear conductive carbon material is attached to the negative electrode active material by the mechanical force again, via the point type conductive carbon material attached to the negative electrode active material.

The particles having the structure may have very good lubrication characteristics to prevent the breakage of particles in the densification, and also, stable electrical contact between particles may be made by the linear conductive carbon material, the point type conductive carbon material coated on the surface of the active material and the linear conductive carbon material bound to the point type conductive carbon material may be maintained a state of being stably bound without being desorbed or detached even with a volume change of the negative electrode active material, and adhesive strength with a current collector may be improved.

As described above, according to an advantageous example of the present invention, when the point type conductive carbon material is added to the negative electrode active material slurry in a state in which the solid content is very high, the point type conductive carbon material may be included at 0.3 to 5 parts by weight, preferably 0.3 to 1.5 parts by weight, more preferably 1.0 part by weight or less, substantially 0.3 to 1.0 part by weight, and more preferably 0.3 to 0.8 parts by weight, based on 100 parts by weight of the negative electrode active material included in the negative electrode active material slurry.

The point type conductive carbon material is evenly bound to the surface of the negative electrode active material by mechanical force, thereby manufacturing an electrode having excellent electrical properties (low resistance) even with the addition of a small amount of only 1.0 part by weight or less, preferably 0.3 to 1.0 part by weight, and more preferably 0.3 to 0.8 parts by weight of the point type conductive carbon material based on 100 parts by weight of the negative electrode active material. The lower the content of the conductive material is, the higher the content occupied by the active material in the active material layer is. Thus, the use of the small amount of the conductive carbon material is advantageous for a higher capacity.

The linear conductive carbon material is added to the first mixed slurry in step b), in which the linear conductive carbon material may be added in a previously dispersed state. Being added in a previously dispersed state means that a dispersion of the linear conductive carbon material is added.

The linear conductive carbon material is easily damaged (cut) during mechanical mixing by morphological characteristics of a large aspect ratio, is difficult to be uniformly mixed by agglomeration together, and is difficult to be bound to the surface of a negative active material, in particular, a silica-based negative electrode active material.

However, by adding the dispersion of the linear conductive carbon material in a previously dispersed state in step b), agglomeration of the linear conductive carbon material may be fundamentally blocked. In addition, the point type conductive carbon material is added to the negative electrode active material slurry having an extremely high solid content and the materials are mixed by step a) to prepare the negative electrode active material coated with the point type conductive carbon material, and then adding the linear conductive carbon material in a previously dispersed state, thereby minimizing damage of the linear conductive carbon material and allowing even and stable binding to the negative electrode active material by the point type conductive carbon material.

The linear conductive carbon material may include carbon nanotubes, carbon fiber, or a mixture thereof, and may have a short axis diameter of 5 to 100 nm, specifically 5 to 20 nm, and a long axis length of 1 to 50 $\mu$m, specifically 3 to 30 $\mu$m, but the present invention is not necessarily limited thereto.

The dispersion medium of the linear conductive carbon material dispersion may be a water-based solvent, and may be the same as or different from the medium of the negative electrode active material slurry. Specifically, the dispersion medium of the dispersion may be water or a mixed solution including water as a main component and a water-compatible solvent as a minor component other than water, independently of the dispersion medium of the negative electrode active material slurry. The water-compatible solvent may be a volatile solvent such as an alcohol, a lower aliphatic ketone, and a lower alkyl acetate, but the present invention is not limited thereto. A non-limiting example of the alcohol may include C2-C4 alcohols such as methanol, ethanol, isopropanol, n-propanol, butanol, and a combination thereof. A non-limiting example of the lower aliphatic ketone may include acetone, dimethyl ketone, methyl ethyl ketone, a combination thereof, and the like, and a non-limiting example of the lower alkyl acetate may include ethyl acetate, isopropyl acetate, propyl acetate, a combination thereof, and the like.

The linear conductive carbon material dispersion may further include a surfactant for improving dispersibility of the linear conductive carbon material. A commonly used surfactant may be used as the dispersant of the linear conductive carbon material depending on the specific kind of the dispersion medium. As a specific example, when the dispersion medium is a water-based solvent, an anionic surfactant such as sodium dodecyl sulfonate or sodium dodecyl benzene sulfonate may be used or a nonionic surfactant such as Triton-X-100 may be used, but the present invention is not necessarily limited thereto.

The dispersion of the linear conductive carbon material may be added to the first mixed slurry, so that the linear conductive carbon material is included at 0.1 to 1.5 parts by weight, specifically 0.3 to 1.0 part by weight, based on 100 parts by weight of the negative electrode active material included in the electrode slurry (or first mixed slurry, or negative electrode active material slurry).

For a concentration of the linear conductive carbon material in the dispersion, after the dispersion is added in step b) so that the mixing ratio described above is satisfied, the second mixed slurry (electrode slurry) prepared may have a solid content decreased by 5 to 15 wt% from the solid content of the negative electrode active material slurry. Specifically, the concentration of the linear conductive carbon material in the dispersion may be a concentration at which the slurry to which the dispersion is added has a solid content decreased by 5 to 15 wt% (A0% -(5~15)%), more specifically 5 to 10 wt% (A0% - (10~15)%) from the solid content (A0%) of the negative electrode active material slurry.

By addition of the linear conductive carbon material in a previously dispersed state in step b) and a decreased solid content during addition of the dispersion, the damage of the linear conductive carbon material may be minimized and the linear conductive carbon material may be uniformly distributed in and bound to the negative electrode active material (negative electrode active material coated with the point type conductive carbon material) by mechanical force in a mixing process.

The linear conductive carbon material is added only in a very small amount, similarly to the point type conductive carbon material, and when the electrode is manufactured according to an advantageous example of the present invention, an electric current between particles of the active material layer is applied well even with the addition of a small amount of the linear conductive carbon material, thereby manufacturing an electrode having low resistance. The use of the small amount of the linear conductive carbon material is also advantageous for a higher capacity of the electrode.

The mixing in step a) and the mixing in step b) may be performed independently of each other, using a mixer or a homogenizer which is commonly used in the preparation of the active material slurry, and may be performed in a single device or in different devices from each other. However, since the slurry has a high solid content, a fine point type conductive carbon material may be strongly and uniformly attached to the surface of the negative electrode active material by impact force, shear force, or the like caused during mixing, and the mixing in step a) and the mixing in step b) may be performed using a planetary mixer, a planetary/despa mixer, a paste mixer, or the like, so that the linear conductive carbon material may be easily attached to the negative electrode active material via the point type conductive carbon material and the damage (pulverization) of the linear conductive carbon material and the negative electrode active material by the mixing may be prevented. In a specific example, the mixing in step a) and the mixing in step b) may be performed using a planetary/despa mixer.

The mixing in step a) or step b) may be performed at 20 to 500 rpm, and as a specific example, the rpm of a rotation stirring means such as a blade in step a) or b) may be 20 to 100 rpm, preferably 30 to 70 rpm. In a specific example, the mixing may be performed using a planetary/despa mixer, and the rpm of a planetary blade which is a rotation blade may be 20 to 100 rpm, or 30 to 70 rpm, and the rpm of a dispersion blade which is a revolution blade may be 150 to 400 rpm, or 150 to 250 rpm.

When mixing in step a) or step b), a mixing time may be a time during which uniform mixing and coating (binding of a linear or point type conductive carbon material) are made, considering the amount of the treated slurry. In a specific example, the mixing time in the mixing in step a) or step b) may be 1 hour or more, specifically 1 to 4 hours, and more specifically 2 to 3 hours, but the present invention is not limited thereto.

The current collector, coating (application), drying, rolling, and the like in step c) may be materials, methods, and conditions which are commonly used in the conventional manufacture of an electrode using an active material slurry.

As an example, an electrode slurry may be coated on a current collector (electrode plate) to form an active material layer (electrode active material layer) coated on the current collector. The current collector may be any material which is commonly used in the secondary battery field and has high conductivity without causing chemical change. As a specific example, the current collector may be copper; stainless steel; aluminum; nickel; titanium; calcined carbon; graphene; carbon nanotubes; aluminum or stainless steel which is surface-treated with carbon, nickel, titanium, silver, graphene, carbon nanotubes, or the like; and the like. The current collector may be in the form of foam, a film, mesh, felt, or a perforated film. In some embodiments, the current collector may be in the form of foil, sheet, or film, and may be stainless steel, titanium, nickel, aluminum, or copper. In a certain embodiment, the current collector of a negative electrode may be a copper thin film. The current collector may have a thickness of several micrometer order to several hundred micrometer order, and as an embodiment, a thickness of 6 $\mu$m to 100 $\mu$m, but the present invention is not limited thereto.

Application (coating) of the slurry may be performed using any method which is known to be used for coating the conventional active material slurry on a current collector. As an example, application (coating) may be performed by one or more methods selected from doctor blade, slot-die, transfer coating, spray coating, roll coating, gravure coating, dip coating, and curtain coating, but the present invention is not limited thereto. In an embodiment, the applied layer formed by the application may have a thickness of 10 $\mu$m to 300 $\mu$m, specifically 20 $\mu$m to 250 $\mu$m, but the present invention is not limited thereto.

After the application is performed, or if necessary, when rolling is performed, drying using a drier may be performed. A non-limiting example of the drier may include a conveyor hot air drying oven, a conveyor resistance drying oven, a conveyor induction drying oven, a conveyor electromagnetic wave drying oven, and the like. In addition, the drying may be performed at 45 to 90°C, 50 to 90°C, or 50 to 80°C, but the present invention is not limited thereto.

After the drying is performed, a densification process for improving a density of the applied layer, compressing the layer to the current collector, and equalizing the thickness may be performed. The densification process may be a step of mechanically compressing the applied layer, and the compression may be performed using roll pressing or the like. Compressing, specifically rolling using a roll press may be performed so that a layer before rolling (dried applied layer) has a compression ratio of 10 to 40%, but the present invention is not limited by the rolling conditions.

In addition, optionally, in order to satisfy coatability (printability) or the like according to a specific application method after preparing the second mixed slurry (electrode slurry) in step b) and before applying (coating) the second mixed slurry in step c), a step of further mixing the binder described above or the solvent described above with the second mixed slurry may be further performed, but the step may be performed optionally, if required, of course.

The present invention includes a negative electrode for a secondary battery manufactured by the manufacturing method described above.

The method for manufacturing a secondary battery according to an exemplary embodiment of the present invention may include: manufacturing a negative electrode by steps including steps a) to c); manufacturing an electrode assembly with a separator interposed between a positive electrode and the negative electrode; and impregnating the electrode assembly with an electrolyte solution.

Specifically, the secondary battery may be manufactured by manufacturing an electrode assembly including a separator interposed between a positive electrode and a negative electrode, charging the manufactured electrode assembly into a battery case, injecting an electrolyte, and sealing the case. Otherwise, the secondary battery may be manufactured by charging the electrode assembly impregnated with the electrolyte solution in a case and sealing the case. The battery case may be any case which is commonly used in the lithium secondary battery field. As an example, the case may have a cylindrical shape, a square shape, a pouch shape, a coin shape, or the like, but the present invention is not limited by the specific shapes of the battery case, of course.

The secondary battery according to the present invention includes an electrode (negative electrode) in which an active material layer including a negative electrode active material having an average diameter ($D_{50}$) of 5 to 20 $\mu$m, a point type conductive carbon material, a linear conductive carbon material, and a binder is disposed on at least one surface of a current collector, the negative electrode active material being sequentially coated with the point type conductive carbon material and the linear conductive carbon material. In description of the secondary battery, unless otherwise stated, the electrode refers to a negative electrode.

In an embodiment, coating may be performed by wet mixing using a negative electrode active material slurry having a solid content of 45 wt% or more. Specifically, the coating may be in a state in which the point type conductive carbon material and the dispersion of the linear conductive carbon material are sequentially added to the negative electrode active material slurry and the materials are mixed, so that the point type conductive carbon material and the linear conductive carbon material are sequentially coated by mechanical force generated in wet mixing.

The negative electrode active material may include a carbon-based active material, a silicon-based active material, or a mixture thereof, and the carbon-based active material may be crystalline carbon, amorphous carbon, or a mixture thereof, and specifically, the carbon-based active material may be artificial graphite, natural graphite, hard carbon, soft carbon, or a mixture thereof. The soft carbon may be derived from coal-based pitch, petroleum-based pitch, tar, heavy oil having a low molecular weight, and the like, and the hard carbon may be derived from a phenol resin, a naphthalene resin, a polyvinyl alcohol resin, a urethane resin, a polyimide resin, a furan resin, a cellulose resin, an epoxy resin, a polystyrene resin, and the like. The silicon-based active material may include silicon, silicon oxides, silicon alloys (transition metal such as Cu, Zr, Ni, Ti, Co, Cr, V, Mn, and Fe-silicon alloy), mixture thereof, and the like.

In an embodiment, the negative electrode active material may include silicon-based active materials, and substantially, include both the carbon-based active materials and the silicon-based active materials. When the negative electrode active material includes both the carbon-based active material and the silicon-based active material, the negative electrode active material may include 5 to 30 parts by weight, specifically 10 to 25 parts by weight of the silicon active material, based on 100 parts by weight of the carbon-based active material.

The negative electrode active material may have an average diameter ($D_{50}$) of 5 to 20 $\mu$m, specifically 5 to 15

μm, and may be a particulate. Here, the particles may be primary particles, secondary particles in which the primary particles are agglomerated, or a mixture thereof. When the negative electrode active material includes both the carbon-based active material and the silicon-based active material, the carbon-based active material and the silicon-based active material may have, independently of each other, an average diameter ($D_{50}$) of 5 to 20 μm, specifically 5 to 15 μm.

The point type conductive carbon material may be any particulate conductive carbon material, but in a certain embodiment, may be carbon black, acetylene black, ketjen black, channel black, furnace black, lamp black, thermal black, or a mixture thereof so that the carbon material is stably bound to the surface of the negative electrode active material within a short time by physical impact, shear force, or the like caused by mixing, but the present invention is not necessarily limited thereto. In an embodiment, a diameter ratio of an average diameter ($D_{50}$) of the negative electrode active material divided by an average diameter ($D_{50}$) of the point type conductive carbon material may be 50 to 300, specifically 100 to 200, and more specifically 100 to 150. Here, as described above, the negative electrode active material may have an average diameter ($D_{50}$) of 5 to 20 μm, specifically 5 to 15 μm.

In a specific embodiment, the linear conductive carbon material may include carbon nanotubes, carbon fiber, or a mixture thereof. The linear conductive carbon material may have a short axis diameter of 5 to 100 nm, specifically 5 to 20 nm and a long axis length of 1 to 50 μm, specifically 3 to 30 μm, but the present invention is not necessarily limited thereto.

The point type conductive carbon material may be included at 0.3 to 5 parts by weight, preferably 0.3 to 1.5 parts by weight, more preferably 1.0 part by weight or less, substantially 0.3 to 1.0 part by weight, and still more preferably 0.3 to 0.8 parts by weight, based on 100 parts by weight of the negative electrode active material.

The linear conductive carbon material may be included at 0.1 to 1.5 parts by weight, specifically 0.3 to 1.0 parts by weight, based on 100 parts by weight of the negative electrode active material.

In a specific example, the electrode (negative electrode) may satisfy the following Equation 1, and in a specific example, may satisfy Equation 1':

$$\text{(Equation 1)}$$

$$[Vp(For)-Vp(RP)]/Vp(RP) \times 100\ (\%) \leq 20\ (\%)$$

$$\text{(Equation 1')}$$

$$[Vp(For)-Vp(RP)]/Vp(RP) \times 100\ (\%) \leq 16\ (\%)$$

wherein Vp(RP) is a porosity ($cm^3/g$) of micropores present in the active material layer, based on a densified state by rolling, Vp(For) is a porosity ($cm^3/g$) of micropores present in the active material layer, based on an activated state by a formation process.

In Equation 1, the porosity of micropores may refer to a total pore volume of pores in which the diameter belongs to a range of 2 to 10 μm per unit mass of the active material layer, in the pore size distribution of the active material layer. Thus, Vp(For) may refer to a porosity of micropores in the active material layer in an activated state by a formation process, and Vp(RP) may refer to a porosity of micropores in the active material layer in a densified state by a rolling process. Here, the pore size distribution of the active material layer may be calculated using mercury intrusion. As known in the art, a cumulative penetration volume of mercury depending on external applied pressure is measured by mercury intrusion, and a radius of a pore into which mercury intrudes at a working pressure follows a Washburn equation. In an embodiment, the active material layer in a densified state may refer to a state in which rolling is performed by roll pressing so that compressibility [100 - (thickness of active material layer after roll pressing process/thickness of active material layer before roll pressing) * 100%] is 10 to 40%, as a specific example, 30 to 40%.

In an embodiment, the active material layer in an activated state may refer to a state in which a solid electrolyte interface (SEI) coat is formed on the surface of an electrode provided with the active material layer in a densified state (densified electrode).

In an embodiment, the active material layer in an activated state may refer to a state in which constant current type or constant voltage type charge and discharge are performed in a secondary battery or a half battery including the densified electrode to form a solid electrolyte interface coat on the surface of a negative electrode.

In a certain embodiment, the active material layer in an activated state may refer to a state in which a secondary battery including an electrode assembly including a negative electrode which is a densified electrode, a positive electrode, and a separator interposed between the positive electrode and the negative electrode; a non-aqueous electrolyte solution impregnated into the electrode assembly; and a battery case in which the electrode assembly and the non-aqueous electrolyte solution are embedded is charged to 4.2 V to 4.25 V with 0.5 C to 1/3 C and then discharged to 2.5 V to 2.7 V with 0.5 C to 1/3 C. Here, after the non-aqueous electrolyte solution is injected before charge and discharge, aging at room temperature and degassing may be further performed, of course, and the degassing may be performed at a level of state of charge of 10 to 30%, of course.

In an embodiment, resistance of the electrode may be 0.05 $\Omega$.cm or less, specifically 0.01 to 0.05 $\Omega$.cm, and more specifically 0.01 to 0.045 $\Omega$.cm. Here, the electrode may be an electrode provided with an active material layer in an activated state, that is, an electrode in an activated state.

An electrode density may be 1.5 mg/cc or more, specifically 1.5 to 2.0 mg/cc, more specifically 1.5 to 1.9 mg/cc, and still more specifically 1.5 to 1.8 mg/cc, but the present invention is not necessarily limited thereto. Here, an electrode having an electrode density of 1.5 mg/cc or more, specifically 1.5 to 2.0 mg/cc, more specifically 1.5 to 1.9 mg/cc, and still more specifically 1.5 to 1.8 mg/cc may be manufactured by the compressibility described above during rolling.

The present invention includes a secondary battery including the electrode manufactured by the manufacturing method described above as a negative electrode.

The present invention includes a secondary battery including the electrode described above as a negative electrode.

Here, the secondary battery according to the present invention may be a secondary battery including a positive electrode; a negative electrode which is the electrode for a secondary battery described above; a separator interposed between the positive electrode and the negative electrode; and an electrolyte solution, and the secondary battery includes a lithium secondary battery.

The positive electrode may be an electrode in which a positive electrode active material layer including a positive electrode active material is formed at least one surface of a positive electrode current collector.

The positive electrode active material in the positive electrode active material layer may be any material capable of reversible desorption/insertion of lithium ions, and may be any electrode material used in the positive electrode of a common lithium secondary battery. As a specific example, the positive electrode active material may include a lithium-metal oxide having a layered structure; a lithium-metal oxide having a spinel structure; a lithium-metal phosphate having an olivine structure; a mixture thereof; or a solid solution or composite thereof. More specifically, the lithium-metal oxide having a layered structure may include $LiMO_2$ (M is one or two or more transition metals selected from Co and Ni); $LiMO_2$ substituted with one or two or more heteroelements selected from the group consisting of Mg, Al, Fe, Ni, Cr, Zr, Ce, Ti, B, and Mn or coated with an oxide of these heteroelements (M is one or two or more transition metals selected from Co and Ni) ; $Li_xNi_\alpha Co_\beta M_\gamma O_2$ (x is a real number of $0.9 \leq x \leq 1.1$, $\alpha$ is a real number of $0.7 \leq \alpha \leq 0.9$, $\beta$ is a real number of $0.05 \leq \beta \leq 0.35$, $\gamma$ is a real number of $0.01 \leq \gamma \leq 0.1$, $\alpha + \beta + \gamma = 1$, M is one or more elements selected from the group consisting of Mg, Sr, Ti, Zr, V, Nb, Ta, Mo, W, B, Al, Fe, Cr, Mn, and Ce) ; or $Li_xNi_aMn_bCo_cM_dO_2$ (x is a real number of $0.9 \leq x \leq 1.1$, a is a real number of $0.3 \leq a \leq 0.6$, b is a real number of $0.3 \leq b \leq 0.4$, c is a real number of $0.1 \leq c \leq 0.4$, $a+b+c+d=1$, M is one or more elements selected from the group consisting of Mg, Sr, Ti, Zr, V, Nb, Ta, Mo, W, B, Al, Fe, Cr, and Ce), but is not limited thereto. The lithium-metal oxide having a spinel structure may include $Li_aMn_{2-x}M_xO_4$ (M is one or two or more elements selected from the group consisting of Al, Co, Ni, Cr, Fe, Zn, Mg, B, and Ti, a is a real number of $1 \leq a \leq 1.1$, and x is a real number of $0 \leq x \leq 0.2$), $Li_4Mn_5O_{12}$, or the like, but is not limited thereto. A phosphate-based material having an olivine structure may include $LiMPO_4$ (M is Fe, Co, or Mn) or the like, but is not limited thereto.

The separator may be any microporous film through which ions involved in charge and discharge such as lithium ions permeate and which electrically insulates the positive electrode and the negative electrode in the common secondary battery. As a specific example, the separator may be a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, alone or a laminate thereof, or a common porous nonwoven fabric, for example, a nonwoven fabric made of glass fiber having a high melting point, a polyethylene terephthalate fiber, and the like, but is not limited thereto.

The separator is simply disposed between the positive electrode and the negative electrode like a common secondary battery to serve to separate the positive electrode and the negative electrode. In addition, the separator may be in the state of being bound (attached) to at least one or more electrodes of the positive electrode and the negative electrode.

The electrolyte of the electrolyte solution may be any common non-aqueous electrolyte which conducts ions involved in charge and discharge of a battery well, in the common lithium secondary battery. As an example, the non-aqueous electrolyte may include a non-aqueous solvent and a lithium salt. As a non-limiting example, the lithium salt contained in the electrolyte may be a salt providing one or more anions selected from the group consisting of lithium cations, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(F_SO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

A solvent in the electrolyte solution may be any common non-aqueous organic solvent used for dissolving an electrolyte, in a common lithium secondary battery. As a specific example, the solvent of the electrolyte solution may be one or more selected from the group consisting of ethylene carbonate, propylene carbonate, 1,2-butylene carbonate, 2,3-butylene carbonate, 1,2-pentylene carbonate, 2,3-pentylene carbonate, vinylene carbonate, dimethyl carbonate, diethyl carbonate, di(2,2,2-trifluoroethyl) carbonate, dipropyl carbonate, dibutyl carbonate, ethyl methyl carbonate, 2,2,2-trifluoroethyl methyl carbonate, methyl propyl carbonate, ethyl propyl carbonate, 2,2,2-trifluoroethyl propyl carbonate, methyl formate, ethyl formate, propyl formate, butyl formate, dimethyl ether, diethyl ether, dipropyl ether, methyl ethyl ether, methyl propyl ether, ethyl propyl ether, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, $\gamma$-butyrolactone, 2-methyl-$\gamma$-butyrolactone, 3-methyl-$\gamma$-butyrolactone, 4-methyl-$\gamma$-butyrolactone, $\gamma$-thiobutyrolactone, $\gamma$-ethyl-$\gamma$-butyrolactone, $\beta$-methyl-$\gamma$-butyrolactone, $\gamma$-valerolactone, $\sigma$-valerolactone, $\gamma$-caprolactone, $\epsilon$-caprolactone, $\beta$-propiolactone, tetrahydrofuran, 2-methyl tetrahydrofuran, 3-methyltetrahydrofuran, trimethyl phosphate, triethyl phosphate, tris(2-chloroethyl) phosphate, tris(2,2,2-trifluoroethyl) phosphate, tripropyl phosphate, triisopropyl phosphate, tributyl phosphate, trihexyl phosphate, triphenyl phosphate, tritolyl phosphate, methyl ethylene phosphate, ethyl ethylene phosphate, dimethyl sulfone, ethyl methyl sulfone, methyl trifluoromethyl sulfone, ethyl trifluoromethyl sulfone, methyl pentafluoroethyl sulfone, ethyl pentafluoroethyl sulfone, di(trifluoromethyl)sulfone, di(pentafluoroethyl) sulfone, trifluoromethyl pentafluoroethyl sulfone, trifluoromethyl nonafluorobutyl sulfone, pentafluoroethyl nonafluorobutyl sulfone, sulfolane, 3-methylsulfolane, 2-methylsulfolane, 3-ethylsulfolane, 2-ethylsulfolane, and the like, but the present invention may not be limited to the lithium salts and the solvents described above, of course.

The present invention includes a battery module, in which the secondary battery described above, as an example, a lithium secondary battery, is used as a unit battery cell and the unit battery cells are connected in series or in parallel.

The present invention includes a device in which electric power is supplied by the secondary battery described above, as an example, the lithium secondary battery. As a specific example, the device may be an electric automobile, a hybrid electric automobile, a plug-in hybrid electric automobile, a system for power storage, and the like, but is not limited thereto.

(Example 1)

Artificial graphite ($D_{50}$=13.1 $\mu$m) and a silicon oxide ($D_{50}$=10.52 $\mu$m) were used as a negative electrode active material, and a mass ratio of the artificial graphite:silicon oxide in the negative electrode active material was 9:1.

A binder (303 g of carboxymethylcellulose and 404 g of styrene-butadiene rubber) was dissolved in 17.826 kg of distilled water, 19.29 kg of the negative electrode active material was added thereto, and stirring was performed for 300 minutes using a planetary/despa mixer (planetary at 45 rpm, despa at 300 rpm) to prepare a negative electrode active material slurry.

Carbon black ($D_{50}$=100 nm) which is a point type conductive carbon material was added to the thus-prepared negative electrode active material slurry (solid content = 51%) so that the carbon black is included at 0.52 parts by weight based on 100 parts by weight of the negative electrode active material, and mixing was performed for 40 minutes using a planetary/despa mixer (rotation blade at 45 rpm, revolution blade at 300 rpm) to prepare a first mixed slurry.

Thereafter, a carbon nanotube aqueous dispersion (CNT: short axis diameter: 11 nm, long axis length 20 $\mu$m, dispersant riton-X-100) was added to the first mixed slurry, in which the carbon nanotube dispersion was added so that carbon nanotubes are included at 0.52 parts by weight based on 100 parts by weight of the negative electrode active material of the first mixed slurry, and mixing was performed for 40 minutes using the same planetary/despa mixer (rotation blade at 45 rpm, revolution blade at 300 rpm) to prepare a second mixed slurry (electrode slurry, solid content 45 wt%).

The thus-prepared electrode slurry was applied on a copper foil and dried, and rolled to compressibility of 34% to manufacture a negative electrode. Here, the density of the negative electrode was 1.67 g/cc.

(Example 2)

A coin full cell was manufactured using the negative electrode manufactured in Example 1, and a polyethylene-based microporous film was used as a separator. A mixed solution of ethylene carbonate (Ec)/ethyl methyl carbonate (EMC) at 1 (vol)/3 (vol) of 1M $LiPF_6$ was used as an electrolyte solution. After the separator was impregnated with the electrolyte solution, the separator was inserted between the positive electrode and the negative electrode, and sealed with a case made of SUS to manufacture a full cell.

The manufactured battery was charged and discharged once under conditions of charge: 4.2 V, 0.1 C constant current (Cc)-constant voltage (CV) and discharge: 2.5 V, 0.1 C CC to perform battery activation by a formation process.

(Comparative Example 1)

After a negative electrode active material slurry was prepared in the same manner as in Example 1, 0.52 parts by weight of carbon black and 0.52 parts by weight of carbon nanotubes based on 100 parts by weight of the negative electrode active material were added simultaneously to the negative electrode active material slurry (solid content of 49 wt%) rather than separately adding the carbon black and the carbon nanotube dispersion sequentially, and mixing was performed for 300 minutes using a planetary/despa mixer (rotation blade at 45 rpm, revolution blade at 300 rpm) to prepare an electrode slurry. Thereafter, the thus-prepared electrode slurry was used to manufacture a negative electrode in the same manner as in Example 1, and a battery was manufactured and activated in the same manner as in Example 2.

(Comparative Example 2)

After a negative electrode active material slurry was prepared in the same manner as in Example 1, only a carbon nanotube dispersion was added so that 0.52 parts by weight of carbon nanotubes was added to the negative electrode active material slurry based on 100 parts by weight of the negative electrode active material, rather than separately adding the carbon black and the carbon nanotube dispersion sequentially, and mixing was performed for 300 minutes using a planetary/despa mixer (rotation blade at 45 rpm, revolution blade at 300 rpm) to prepare an electrode slurry. Thereafter, the thus-prepared electrode slurry was used to manufacture a negative electrode in the same manner as in Example 1, and a battery was manufactured and activated in the same manner as in Example 2.

The following Table 1 is a table in which in Example 1, Example 2, Comparative Example 1, and Comparative Example 2, in a pore size distribution calculated using a nitrogen adsorption/desorption isotherm for each of the negative electrode before activation (densified electrode) and the activated negative electrode of a half battery, peak positions in a micropore size area are summarized, and pore increase rates of a porosity (Vp(For)) of micropores (pore size of 1.5 to 10 $\mu$m) of the negative electrode in the activated half battery ([Vp(For)-Vp(RP)]/Vp(RP) x 100 (%)) were measured based on a porosity (Vp(RP)) of micropores (pore size of 1.5 to 10 $\mu$m) of the negative electrode densified by rolling and are summarized, and peak positions in a micropore area in the pore size distribution of the negative electrode in the activated half battery and the electrode densities of the negative electrodes manufactured in Example 2, Comparative Example 1, and Comparative Example 2 are summarized.

(Table 1)

| | Micropore peak position ($\mu$m) | Pore increase rate (%) | Electrode density (g/cc) |
|---|---|---|---|
| Example 2 | 6.45 | 16 | 1.64 |
| Comparative Example 1 | 3.9 and 6.04 | 22 | 1.63 |
| Comparative Example 2 | 6.45 | 38 | 1.57 |

The pores belonging to the micropores (area of a pore size of 1.5 to 10 $\mu$m) correspond to interparticle pores, and as an active material breakage phenomenon gets worse during rolling, a side reaction between the active material and the electrolyte solution is increased, so that an SEI coat is increased during activation and micropores are increased.

As seen from Table 1, in the negative electrode manufactured in Comparative Example 2 (only carbon nanotube added), it was confirmed that the carbon nanotubes were not bound to the active material, so that active material breakage occurs much during rolling and the micropore increase rate during the activation was as large as 38%.

In Comparative Example 1 in which both carbon black and carbon nanotubes were added, the carbon black itself has too small size of 100 nm, which is thus in a state of being difficult to perform lubrication. When both the extremely fine point type conductive carbon material and the carbon nanotubes are added, it was confirmed that breakage of carbon nanotubes occurs at a level which may not be ignored occurred in a mixing process so that the carbon black and the carbon nanotubes were coated on the surface of the negative electrode active material simultaneously, and thus, though less than that of Comparative Example 2, the breakage of the active material during rolling occurred in a large amount, so that the micropore increase rate during activation was as large as 22%.

However, in the case of the negative electrode manufactured according to an exemplary embodiment, it was confirmed that the active material was wrapped by extremely fine carbon black and coated again with carbon nanotubes to greatly suppress the breakage the active material during rolling, and thus, the micropore increase rate during activation was only 16%.

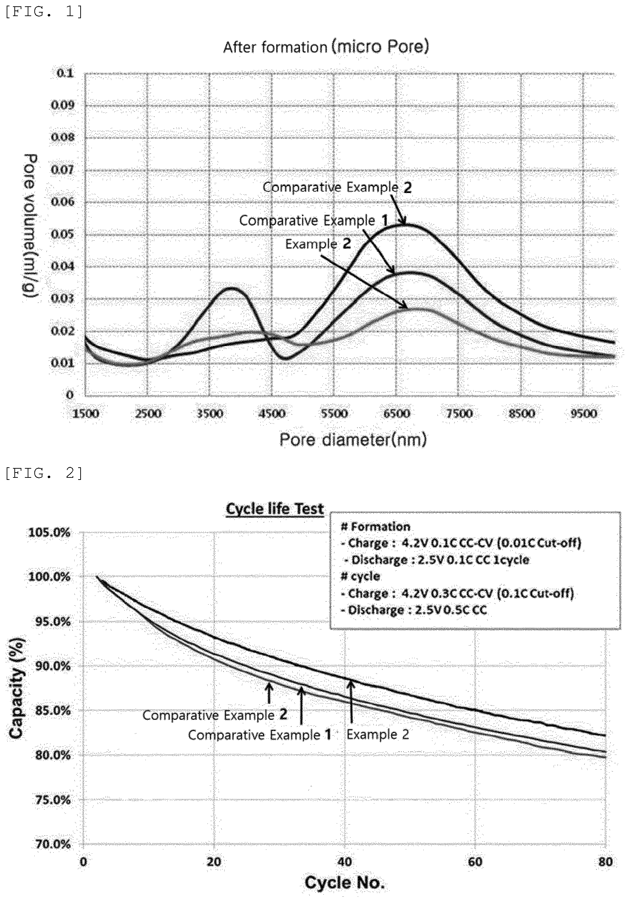

In addition, as seen from Table 1, it was found that an electrode loading amount in the Example and the Comparative Examples was the same, which was 10.6 mg/cm$^2$, but the micropore increase rate after the activation of the negative electrode manufactured according to an exemplary embodiment was decreased, and a uniform micropore distribution as compared with Comparative Example 1 was maintained. FIG. 1 is a drawing illustrating the micropore (1.5 to 10 $\mu$m) size distribution of the negative electrode in the activated battery manufactured in Example 2, Comparative Example 1, and Comparative Example 2. Consistently with the results of Table 1, it was confirmed from FIG. 1 that the negative electrode manufactured according to an exemplary embodiment had a greatly decreased porosity of micropores.

The following Table 2 is a table in which electrode resistance (Ω.cm) and adhesive strength (N) of the activated battery manufactured in Example 2, Comparative Example 1, and Comparative Example 2 were measured and are summarized. The electrode resistance was measured by three-electrode analysis, the adhesive strength was obtained by measuring a strength when a tape was attached to an electrode and then detached therefrom at an angle of 90°, and the measurement equipment was IMADA Z Link 3.1.

(Table 2)

|  | Electrode resistance (Ω•cm) | Adhesive strength (N) |
|---|---|---|
| Example 2 | 0.044 | 0.20 |
| Comparative Example 1 | 0.052 | 0.19 |
| Comparative Example 2 | 0.059 | 0.19 |

As seen from Table 2, it was confirmed that when the electrode was manufactured according to an exemplary embodiment of the present invention, active material breakage was prevented and also both the electrical properties and the adhesive strength of the electrode were also improved.

In addition, it was confirmed that when the electrode (negative electrode) was manufactured according to an exemplary embodiment of the present invention, the interfacial resistance of the negative electrode was 0.165 Ω and the diffusion resistance of the negative electrode was 0.562 Ω, based on the activated battery, and thus, the electrode had lower interfacial resistance and diffusion resistance than those of the electrodes manufactured in Comparative Example 1 and Comparative Example 2.

FIG. 2 is a drawing illustrating cycle characteristics of the electrodes manufactured in Example 2, Comparative Example 1, and Comparative Example 2, and the cycle characteristics were measured by performing charge and discharge under conditions of charge: 4.2 V, 0.3 C CC-CV (0.1C cut-off) and discharge: 2.5 V, 0.5 C CC.

As seen from Table 2, it was confirmed that the electrode manufactured according to an exemplary embodiment of the present invention had a microporosity decrease due to prevention of the breakage of the electrode active material, had improved electrical conductivity and improved adhesive strength, and also had greatly improved cycle characteristics.

Hereinabove, although the present invention has been described by specific matters, limited exemplary embodiments, and drawings, they have been provided only for assisting the entire understanding of the present invention, and the present invention is not limited to the exemplary embodiments, and various modifications and changes may be made by those skilled in the art to which the present invention pertains from the description.

Therefore, the spirit of the present invention should not be limited to the above-described exemplary embodiments, and the following claims as well as all modified equally or equivalently to the claims are intended to fall within the scope and spirit of the invention.

**Claims**

1. A method for manufacturing a secondary battery, the method comprising:

   a) adding a point type conductive carbon material to a negative electrode active material slurry and mixing the materials to prepare a first mixed slurry;
   b) adding a dispersion of a linear conductive carbon material to the first mixed slurry and mixing the materials to prepare a second mixed slurry; and
   c) coating a current collector with the second mixed slurry and performing rolling to manufacture an electrode.

2. The method for manufacturing a secondary battery of claim 1, wherein the point type conductive carbon material is added to the negative electrode active material slurry having a solid content of 45 wt% or more in a).

3. The method for manufacturing a secondary battery of claim 2, wherein after the adding of a dispersion in b), a solid content of the slurry to which the dispersion is added is decreased by 5 to 15 wt% from the solid content of the negative electrode active material slurry.

4. The method for manufacturing a secondary battery of claim 1, wherein the point type conductive carbon material is carbon black, acetylene black, ketjen black, channel black, furnace black, lamp black, thermal black, or a mixture thereof.

**5.** The method for manufacturing a secondary battery of claim 1, wherein the linear conductive carbon material is nanotubes, carbon fiber, or a mixture thereof.

**6.** The method for manufacturing a secondary battery of claim 1, wherein the negative electrode active material is a carbon-based active material, a silicon-based active material, or a mixture thereof.

**7.** The method for manufacturing a secondary battery of any one of claims 1 to 6, wherein 0.3 to 5 parts by weight of the point type conductive carbon material is added, based on 100 parts by weight of the negative electrode active material in a).

**8.** The method for manufacturing a secondary battery of any one of claims 1 to 6, wherein the dispersion of the linear conductive carbon material is added so that 0.1 to 1.5 parts by weight of the linear conductive carbon material is included, based on 100 parts by weight of the negative electrode active material in b).

**9.** The method for manufacturing a secondary battery of any one of claims 1 to 6, wherein a diameter ratio of an average diameter ($D_{50}$) of the negative electrode active material divided by an average diameter ($D_{50}$) of the point type conductive carbon material is 50 to 300.

**10.** The method for manufacturing a secondary battery of any one of claims 1 to 6, wherein the average diameter ($D_{50}$) of the negative electrode active material is 5 to 20 $\mu$m.

**11.** A secondary battery comprising an electrode in which an active material layer including a negative electrode active material having an average diameter ($D_{50}$) of 5 to 20 $\mu$m, a point type conductive carbon material, a linear conductive carbon material, and a binder is disposed on at least one surface of a current collector, the negative electrode active material being in a state of being sequentially coated with the point type conductive carbon material and the linear conductive carbon material.

**12.** The secondary battery of claim 11, wherein the electrode satisfies the following Equation 1:

$$[Vp(For)-Vp(RP)]/Vp(RP) \times 100 \, (\%) \leq 20 \, (\%)$$

wherein Vp(RP) is a porosity ($cm^3$/g) of micropores present in the active material layer, based on a densified state by roll pressing, Vp(For) is a porosity ($cm^3$/g) of micropores present in the active material layer, based on an activated state by a formation process.

**13.** The secondary battery of claim 11, wherein the electrode has a resistance of 0.05 $\Omega$.cm or less.

**14.** The secondary battery of claim 13, wherein the electrode has a density of 1.5 g/$cm^3$ or more.

**15.** The secondary battery of claim 11, wherein the negative electrode active material is a carbon-based active material, a silicon-based active material, or a mixture thereof.

**16.** The secondary battery of claim 11, wherein the active material layer includes 0.3 to 5 parts by weight of the point type conductive carbon material and 0.1 to 1.5 parts by weight of the linear conductive carbon material, based on 100 parts by weight of the negative electrode active material.

**17.** The secondary battery of claim 11, wherein the point type conductive carbon material is carbon black, acetylene black, ketjen black, channel black, furnace black, lamp black, thermal black, or a mixture thereof.

[FIG. 1]

**After formation (micro Pore)**

[FIG. 2]

**Cycle life Test**

## INTERNATIONAL SEARCH REPORT

| | International application No. |
|---|---|
| | PCT/KR2020/001313 |

**A. CLASSIFICATION OF SUBJECT MATTER**

*H01M 4/139(2010.01)i, H01M 4/62(2006.01)i, H01M 4/04(2006.01)i, H01M 4/36(2006.01)i, H01M 4/587(2010.01)i, H01M 4/48(2010.01)i, H01M 4/38(2006.01)i, H01M 4/13(2010.01)i, H01M 10/052(2010.01)i*

According to International Patent Classification (IPC) or to both national classification and IPC

**B. FIELDS SEARCHED**

Minimum documentation searched (classification system followed by classification symbols)

H01M 4/139; H01M 10/052; H01M 10/0525; H01M 4/13; H01M 4/131; H01M 4/36; H01M 4/485; H01M 4/62; H01M 4/04; H01M 4/587; H01M 4/38

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)

eKOMPASS (KIPO internal) & Keywords: dot-like conductive carbon, linear conductive carbon, negative active material, slurry, secondary battery

**C. DOCUMENTS CONSIDERED TO BE RELEVANT**

| Category* | Citation of document, with indication, where appropriate, of the relevant passages | Relevant to claim No. |
|---|---|---|
| X | KR 10-2015-0028662 A (LG CHEM, LTD.) 16 March 2015 See paragraphs [0010]-[0071]; and figure 5. | 11-17 |
| Y | | 1-10 |
| Y | KR 10-1761524 B1 (LG CHEM, LTD.) 25 July 2017 See paragraphs [0031]-[0102]. | 1-10 |
| A | KR 10-2015-0052004 A (DENKI KAGAKU KOGYO KK.) 13 May 2015 See the entire document. | 1-17 |
| A | JP 2014-139920 A (SHIN ETSU CHEM CO., LTD. et al.) 31 July 2014 See the entire document. | 1-17 |
| A | JP 2013-077479 A (MITSUBISHI MATERIALS CORP. et al.) 25 April 2013 See the entire document. | 1-17 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 MAY 2020 (07.05.2020) | 08 MAY 2020 (08.05.2020) |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2020/001313**

| Patent document cited in search report | Publication date | Patent family member | Publication date |
|---|---|---|---|
| KR 10-2015-0028662 A | 16/03/2015 | KR 10-1669711 B1 | 27/10/2016 |
| KR 10-1761524 B1 | 25/07/2017 | CN 107046815 A | 15/08/2017 |
| | | EP 3203560 A1 | 09/08/2017 |
| | | EP 3203560 B1 | 05/02/2020 |
| | | JP 2018-501602 A | 18/01/2018 |
| | | JP 6345797 B2 | 20/06/2018 |
| | | US 10128508 B2 | 13/11/2018 |
| | | US 2017-0365858 A1 | 21/12/2017 |
| | | WO 2017-099272 A1 | 15/06/2017 |
| KR 10-2015-0052004 A | 13/05/2015 | CN 104603992 A | 06/05/2015 |
| | | CN 104603992 B | 21/08/2018 |
| | | JP 6344740 B2 | 20/06/2018 |
| | | TW 201415697 A | 16/04/2014 |
| | | TW 1628836 B | 01/07/2018 |
| | | WO 2014-034635 A1 | 06/03/2014 |
| JP 2014-139920 A | 31/07/2014 | CN 103872298 A | 18/06/2014 |
| | | CN 103872298 B | 08/06/2018 |
| | | JP 6237094 B2 | 29/11/2017 |
| | | KR 10-2014-0079281 A | 26/06/2014 |
| JP 2013-077479 A | 25/04/2013 | None | |

Form PCT/ISA/210 (patent family annex) (January 2015)